# EUROPEAN PATENT APPLICATION

(11) **EP 1 510 319 A1**
(43) Date of publication of application: **02.03.2005**
(21) Application number: 04019138.9
(22) Date of filing: 12.08.2004
(51) Int. Cl.: B29B 11/08, B65D 23/10

(54) **PET bottle with integrated handle and method of manufacturing the same**

(30) Priority: 26.08.2003 KR 2003059167
(71) Applicant: OKYA Co., Ltd., Incheon city, 404-250 (KR)
(72) Inventor: Kim, Hong-Yeol, Yeongdeungpo-gu Seoul 150-762 (KR)
(74) Representative: Patentanwälte Rüger, Barthelt & Abel

(57) **Abstract**

The present invention relates to a PET bottle with an integrated handle (4) and a method of manufacturing the PET bottle, in which the handle (4) is integrally formed on the PET bottle. Thus, the handle (4) is easily provided on the bottle body (3), and has a high strength to enhance the structural durability of the PET bottle. The method includes a preform-forming step (S10) of injecting a molten resin into a first mold unit (10) to produce a preform having a mouth (2), a body (3) and a handle (4); a heating step (S20) of heating the preform; a drawing/blowing step (S30) of drawing the body of the preform by a drawing bar (21) to lengthen the body in a second mold unit (20), and blowing air into the body to shape the body according to the shape of a cavity of the second mold unit (20); and a product-removing step (S40) of removing a product from the second mold unit.

## Description

### BACKGROUND OF THE INVENTION

### Field of the Invention

The present invention relates, in general, to polyethylene terephthalate (PET) bottles with handles and methods of manufacturing the PET bottles and, more particularly, to a PET bottle with an integrated handle and a method of manufacturing the PET bottle, in which the handle allowing a user to more conveniently handle the PET bottle is integrally formed on a PET bottle body during an injection-molding process of producing the PET bottle body, so that the handle is simply and easily provided on the PET bottle body, and has a high strength to enhance the structural durability of the PET bottle, and secures the operational stability and safety of the PET bottle while handling the PET bottle.

### Description of the Prior Art

Generally, a variety of edible liquids and condiments (herein below, referred to simply as "edible liquids"), such as beverages, mineral waters, edible oils, soybean sources, and vinegars, are typically bottled in PET bottles, and distributed to be sold in markets. Most conventional PET bottles for such edible liquids have been manufactured through the following process.

To manufacture the conventional PET bottles, a preform is first produced through an injection-molding process, and thereafter, subjected to a heating process using a heater, and then, shaped into a final product having a designated shape through a blowing process using a mold unit having a cavity with a shape that corresponds to the designated shape of the final product.

The conventional PET bottles may be provided with handles. To provide a handle on a conventional PET bottle, the handle that has been previously produced through a separate process is fitted around the neck of a PET bottle body after the blowing process of shaping the PET bottle is finished.

However, because the handle of the conventional PET bottle is not integrally formed on the PET bottle body during the injection-molding process of producing the PET bottle, but is produced through a separate process, and then, coupled to the PET bottle body, the conventional PET bottle with such a handle is problematic as follows. First, the coupled state of the handle relative to the PET bottle body is not strong, so that the handle may be easily removed from the PET bottle body when impact or load is applied to the handle. Furthermore, the neck of the PET bottle body, to which the separately produced handle is coupled, must be constructed to be thicker than the other parts of the bottle body to endure a load which may be applied thereto from the handle. Thus, the amount of material consumed to produce the PET bottle must increase. In addition, the process of coupling the handle to the neck of the PET bottle body is a difficult process that also consumes excessive time. Furthermore, because the PET bottle body and the handle are made of different materials, the strength of the coupled junction between the handle and the PET bottle body is reduced due to the different materials used to produce them.

### SUMMARY OF THE INVENTION

Accordingly, the present invention has been made keeping in mind the above problems occurring in the prior art, and an object of the present invention is to provide a PET bottle with an integrated handle and a method of manufacturing the PET bottle, in which the handle is integrated with a PET bottle body at a drawing/blowing step of shaping the PET bottle body, so that the handle is firmly integrated with the PET bottle body to allow a user to stably and safely handle the PET bottle, and results in a simple and easy process of providing the handle on the PET bottle body, and secures the operational stability and safety of the PET bottle while the user handles the PET bottle.

In order to accomplish the above object, the present invention provides a method of manufacturing a PET bottle through an injection-molding process, comprising: a preform-forming step of injecting a molten resin into a first mold unit through an injector, thus producing a preform having a mouth, a body and a handle through the injection-molding process; a heating step of heating the preform by a heater; a drawing/blowing step of placing the heated preform in a second mold unit, and drawing the body of the preform by a drawing bar to lengthen the body, and blowing air into the body of the preform to shape the body according to a shape of a cavity of the second mold unit; a handle integrating step of burying an end of the handle in the body of the preform to integrate the handle with the body while the body is blown with the air at the drawing/blowing step; and a product-removing step of opening the second mold unit to remove a product from the second mold unit.

The above-mentioned method of the present invention is characterized in that, at the preform-forming step, the mouth, the body and the handle of the preform are injection-molded to be integrated into a single structure, and then, at the drawing/blowing step, an end of the handle is buried in the body to be integrated therewith.

The present invention also provides a PET bottle of which the mouth, the body and the handle are formed of the same material to be integrated into a single structure through an injection-molding process. Furthermore, an extension may be provided, through the injection-molding process, to extend from the handle to a predetermined portion of the body around a lower portion of the mouth, thus integrating the handle with the body, while a locking piece may be provided at the end of the handle to integrate the end of the handle with the body.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a flowchart of a method of manufacturing a PET bottle according to the present invention;
FIG. 2 is a view schematically representing the steps that constitute the method of manufacturing the PET bottle according to the present invention;
FIGS. 3a, 3b and 3c are enlarged sectional views representing specified steps that constitute the method of manufacturing the PET bottle according to the present invention;
FIG. 4 is a side view of a PET bottle with an integrated handle according to a first embodiment of the present invention;
FIGS. 5a and 5b are side views of PET bottles with integrated handles according to a second embodiment of the present invention;
FIGS. 6a, 6b and 6c are side views of PET bottles with integrated handles according to a third embodiment of the present invention;
FIGS. 7a, 7b, 7c and 7d are sectional views of parts of PET bottles with integrated handles according to a fourth embodiment of the present invention;
FIGS. 8a and 8b are sectional views of parts of PET bottles with integrated handles according to a fifth embodiment of the present invention; and
FIG. 9 is a sectional view of a part of a PET bottle with an integrated handle according to a sixth embodiment of the present invention.

### DETAILED DESCRIPTION OF THE INVENTION

Reference will now be made in greater detail to a preferred embodiment of the invention, an example of which is illustrated in the accompanying drawings. Wherever possible, the same reference numerals will be used throughout the drawings and the description to refer to the same or like parts.

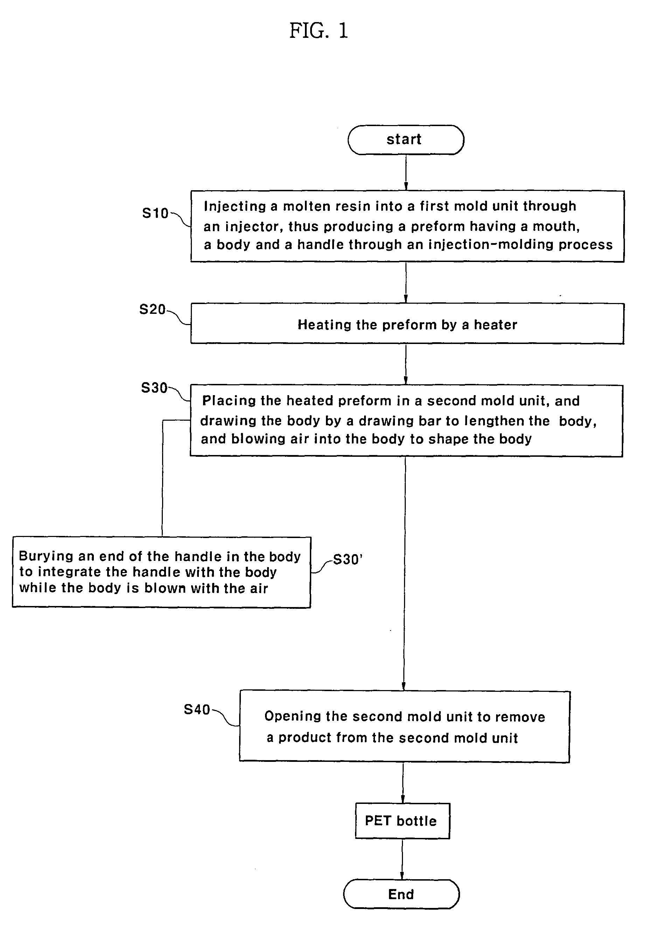

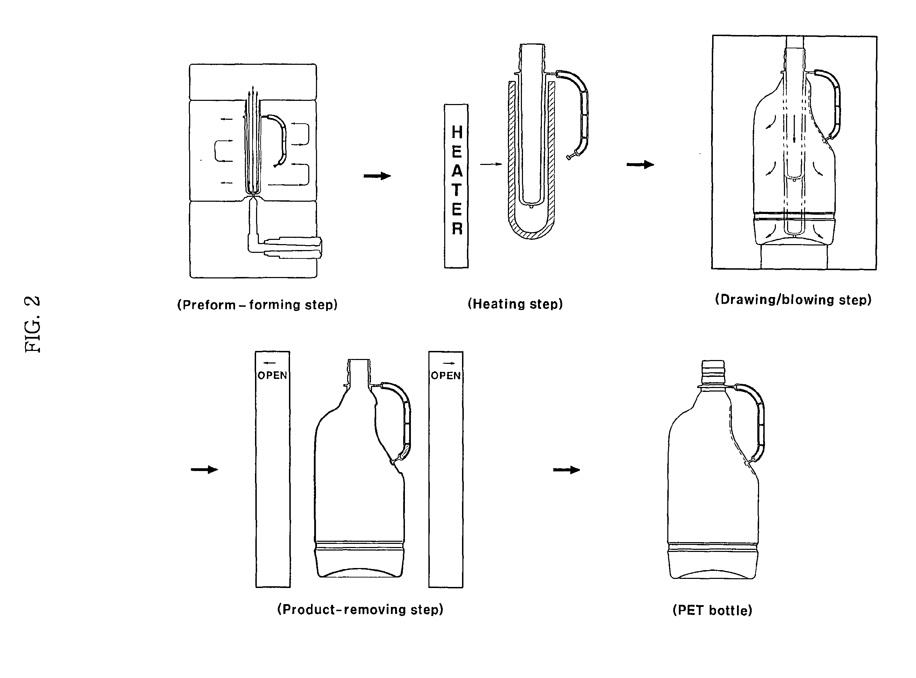

FIG. 1 is a flowchart of a method of manufacturing a PET bottle according to the present invention. FIG. 2 is a view schematically representing the steps that constitute the method of manufacturing the PET bottle according to the present invention. As shown in the drawings, to manufacture a PET bottle with an integrated handle according to the present invention, a molten resin is injected into a first mold unit 10 through a resin injector at a preform-forming step S10, thus producing a preform having a mouth 2, a body 3 and a handle 4 through an injection-molding process. Thereafter, the preform produced at the preform-forming step S10 is heated by a heater H at a heating step S20. Thereafter, a drawing/blowing step S30 is executed to place the preform, heated by the heater H, in a second mold unit 20, and thereafter, draw the body 3 of the preform by a drawing bar 21 to lengthen the body 3 to a predetermined length, and blow air into the body 3 to shape the body 3 according to the shape of a cavity of the second mold unit 20.

At the drawing/blowing step S30, a desired PET bottle is shaped within the second mold unit 20 through the drawing and blowing processes. During the drawing/blowing step S30, a handle integrating step S30' is executed to bury a lower end of the handle 4 in the body 3 of the preform to integrate the handle 4 with the body 3 while the body 3 is blown with air. Thereafter, a product-removing step S40 is executed to open the second mold unit 20 and remove the product from the second mold unit 20. Thus, the process of manufacturing the PET bottle with the integrated handle is terminated.

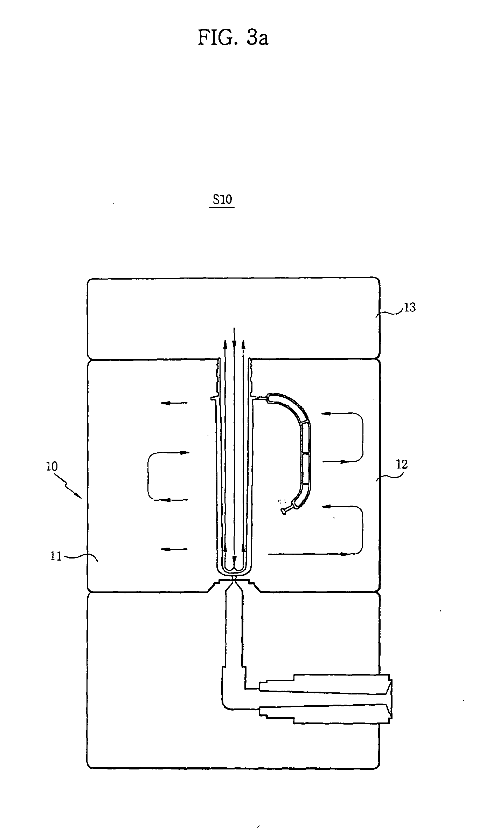

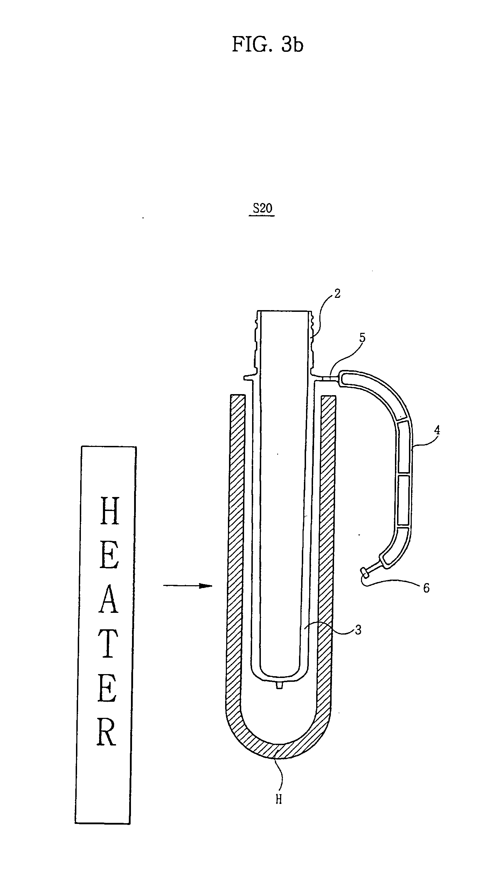

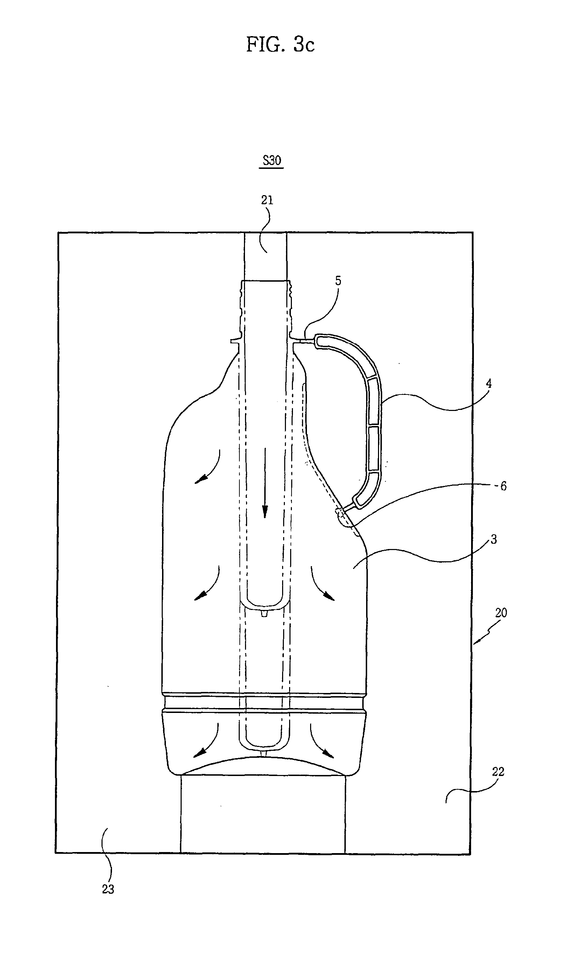

FIGS. 3a, 3b and 3c are enlarged sectional views representing specified steps that constitute the method of manufacturing the PET bottle according to the present invention. FIG. 3a shows the preform-forming step S10 at which the molten resin is injected through the resin injector into the first mold unit 10 that comprises first, second and third molds 11, 12 and 13 and defines therein a cavity with a shape corresponding to the designated shape of the preform to be injection-molded, thus producing the preform having the mouth 2, the body 3 and the handle 4. FIG. 3b shows the heating step S20 at which the body 3 of the injection-molded preform is heated by the heater H. FIG. 3c shows the drawing/blowing step S30 at which the preform that has been injection-molded at the step of FIG. 3a and heated at the step of FIG. 3b is placed in the second mold unit 20 which comprises fourth and fifth molds 22 and 23 and defines therein the cavity with the predetermined shape corresponding to the designated shape of the PET bottle to be manufactured. Thereafter, the drawing bar 21 is moved downward into the body 3 placed in the second mold unit 20, thus lengthening the body 3 to the predetermined length, and thereafter, air is blown into the body 3 to shape the body 3 according to the shape of the cavity of the second mold unit 20.

When the body 3 is shaped according to the shape of the cavity of the second mold unit 20 through the air blowing process at the drawing/blowing step S30 of FIG. 3c, the lower end of the handle 4 is buried in the body 3 to be integrated therewith.

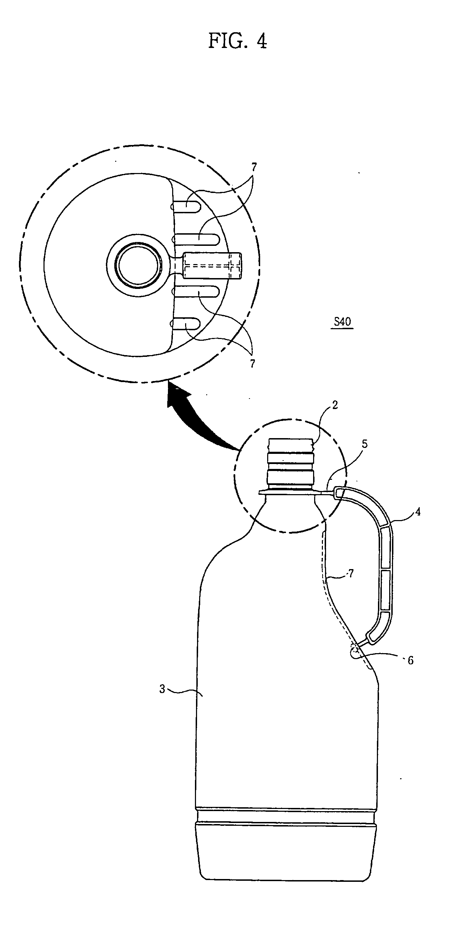

FIG. 4 is a side view of a PET bottle with an integrated handle according to the first embodiment of the present invention. The PET bottle of FIG. 4 is injection-molded in the form of an integrated structure with the mouth 2, the body 3 and the handle 4 through the preform-forming step S10, the heating step S20 and the drawing/blowing step S30. The mouth 2, the body 3 and the handle 4 are integrally formed of the same material, with both an extension 5 which is provided through the injection-molding process to extend from an upper end of the handle 4 to a predetermined portion of the body 3 around a lower portion of the mouth 2, thus integrating the upper end of the handle 4 with the body 3, and a locking piece 6 which is provided at the lower end of the handle 4 to integrate the lower end of the handle 4 with the body 3.

The locking piece 6, which is provided at the lower end of the handle 4, is buried in the body 3 to be integrated therewith while the body 3 is shaped through the air blowing process.

Formed on the body 3 within a predetermined portion around the injection-molded handle 4 are a plurality of longitudinal grooves 7 that are spaced out at regular intervals.

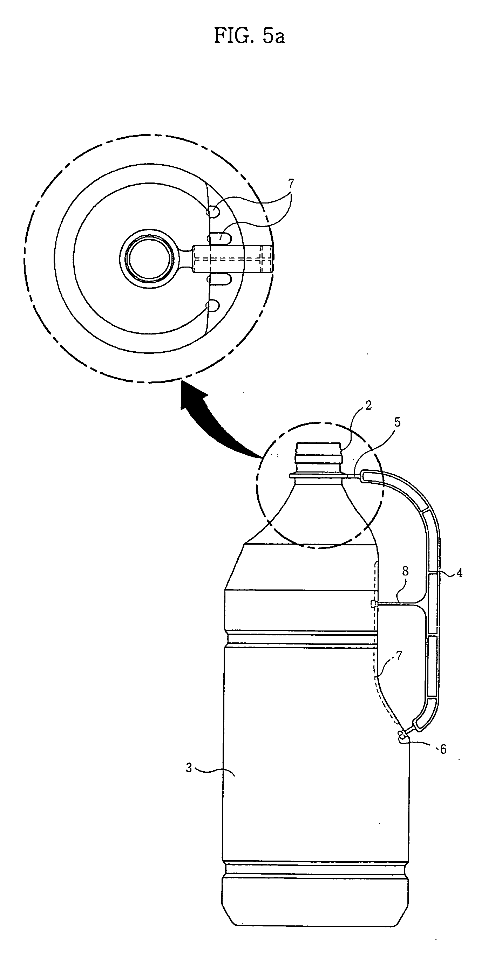

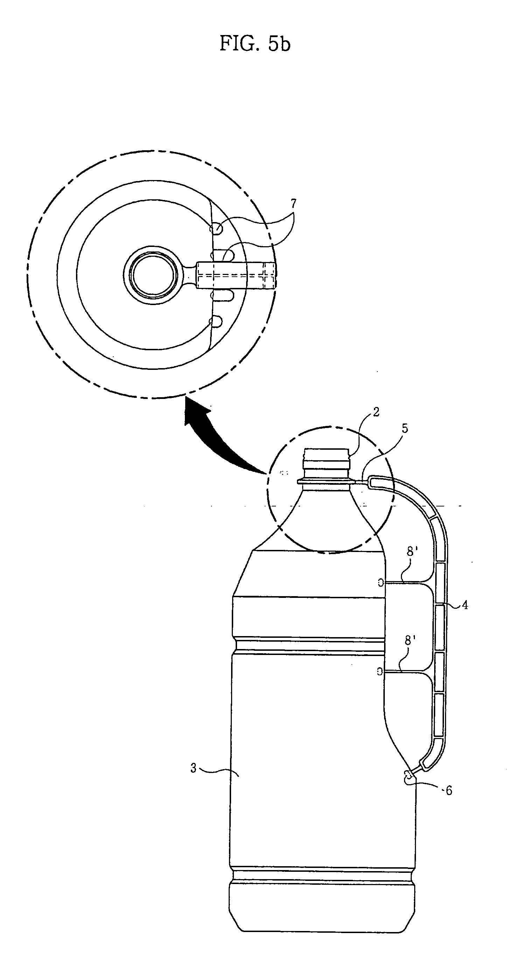

FIGS. 5a and 5b are side views of PET bottles with integrated handles according to a second embodiment of the present invention. In the PET bottle according to the second embodiment of FIG. 5a, an upper end of a handle 4 is integrated with a body 3 of the PET bottle by means of an extension 5 that is an upper extension provided through an injection-molding process to extend from the handle 4 to a predetermined portion around a lower portion of a mouth 2 of the PET bottle. A locking piece 6, which is provided at a lower end of the handle 4, is buried in the body 3 to be integrated therewith while the body 3 is shaped through an air blowing process, in the same manner as that described for the first embodiment. Furthermore, a sub-extension 8 is provided through the injection-molding process at an intermediate portion of the inside surface of the handle 4, with a sub-locking piece provided at an end of the sub-extension 8 to be buried in and integrated with the body while the body 3 is shaped through the air blowing process, in the same manner as that described for the locking piece 6.

In the PET bottle of FIG. 5b showing a modification of the second embodiment, an upper end of a handle 4 is integrated with the body 3 by means of an extension 5 that is an upper extension provided through an injection-molding process to extend from the handle 4 to a predetermined portion around a lower portion of the mouth 2. A locking piece 6, which is provided at the lower end of the handle 4, is buried in and integrated with the body 3 while the body 3 is shaped through an air blowing process. Furthermore, two sub-extensions 8' are provided through the injection-molding process at intermediate portions of the inside surface of the handle 4, with a sub-locking piece provided at an end of each of the two sub-extensions 8' to be buried in and integrated with the body 3 while the body 3 is shaped through the air blowing process.

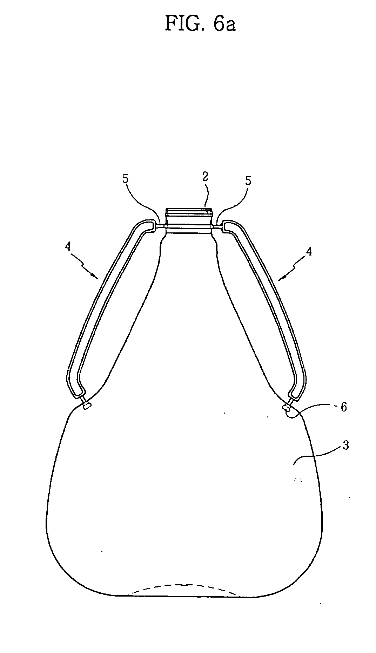

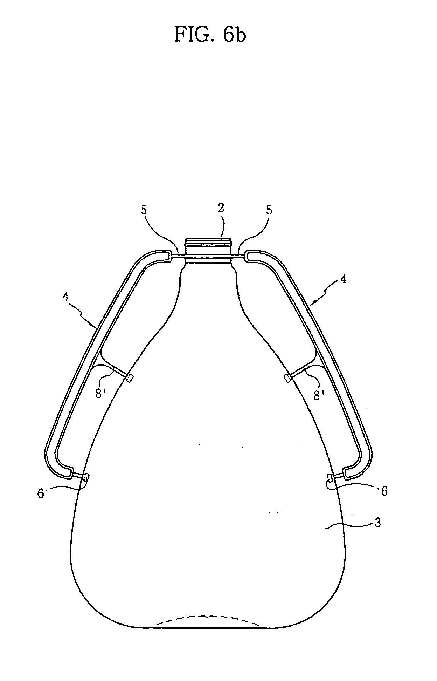

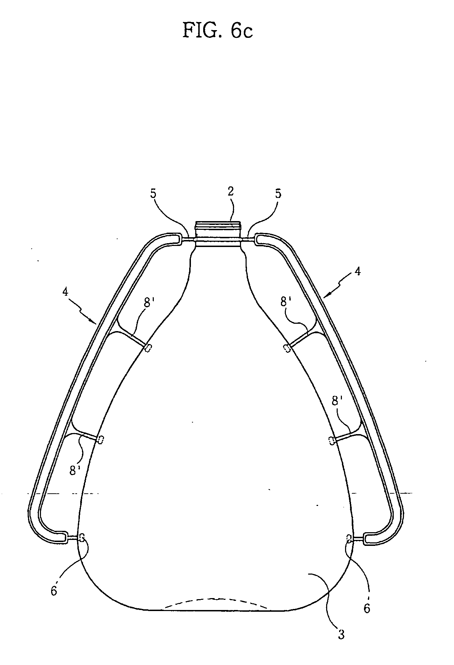

FIGS. 6a; 6b and 6c are side views of PET bottles with integrated handles according to a third embodiment of the present invention. Each of the PET bottles of FIGS. 6a, 6b and 6c is produced in the form of a single structure with a body 3 integrated with two handles 4 through the method of FIGS. 1 and 2. In a detailed description, the PET bottle of FIG. 6a is integrated with two handles 4 at opposite sides of the body 3 through an injection-molding process. In the PET bottle of FIG. 6b showing a modification of the second embodiment, the two handles 4 are integrally provided at the opposite sides of the body 3 so that each of the two handles 4 extends from an upper portion to an intermediate portion of the body 3, with a sub-extension 8 integrally provided through the injection-molding process at an intermediate portion of the inside surface of each of the two handles 4 to be integrated with the body 3.

Furthermore, in the PET bottle of FIG. 6c showing another modification of the second embodiment, the two handles 4 are integrally provided through an injection-molding process at the opposite sides of the body 3 so that each of the two handles 4 extends from an upper portion to a lower portion of the body 3, with two spaced sub-extensions 8' integrally provided through the injection-molding process at intermediate portions of the inside surface of each of the two handles 4 to be integrated with the body 3.

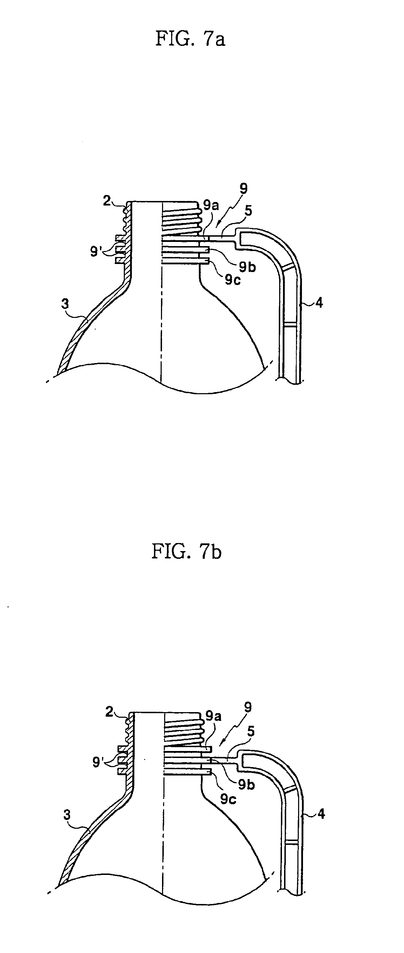

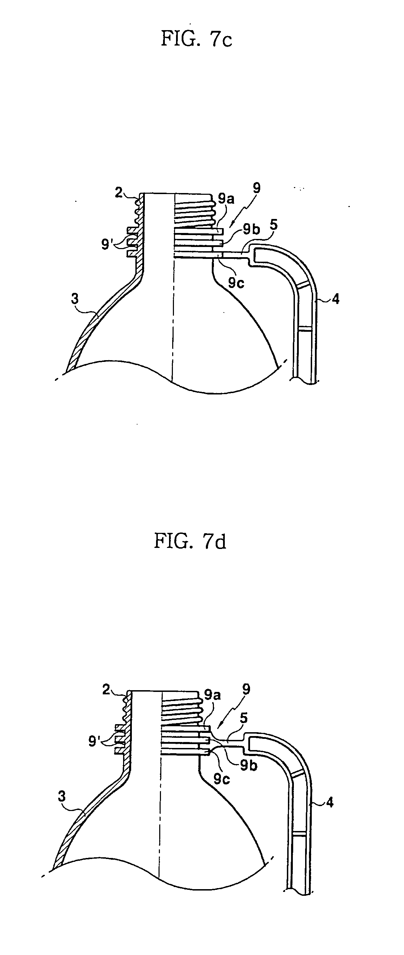

FIGS. 7a, 7b, 7c and 7d are sectional views of PET bottles with integrated handles according to a fourth embodiment of the present invention. In the PET bottles according to the fourth embodiment, a plurality of support rings 9 are formed around a lower portion of the mouth 2 of the body 3 to be spaced out at regular intervals, thus defining a plurality of spaced annular grooves 9' between the support rings 9. The handle 4 is integrated through an injection-molding process with the body 2 at one of the support rings 9 as follows.

First, as shown in FIG. 7a, the handle 4 may be injection-molded so that the extension 5 of the handle 4 is integrated with an upper support ring 9a of the plurality of support rings 9. Second, as shown in FIG. 7b, the handle 4 may be injection-molded so that the extension 5 of the handle 4 is integrated with the middle support ring 9b of the plurality of support rings 9.

Third, as shown in FIG. 7c, the handle 4 may be injection-molded so that the extension 5 of the handle 4 is integrated with a lower support ring 9c of the plurality of support rings 9. Fourth, as shown in FIG. 7d, the handle 4 may be injection-molded so that the extension 5 of the handle 4 is integrated with the middle support ring 9b while covering parts of the annular grooves 9' defined above and below the middle support ring 9b.

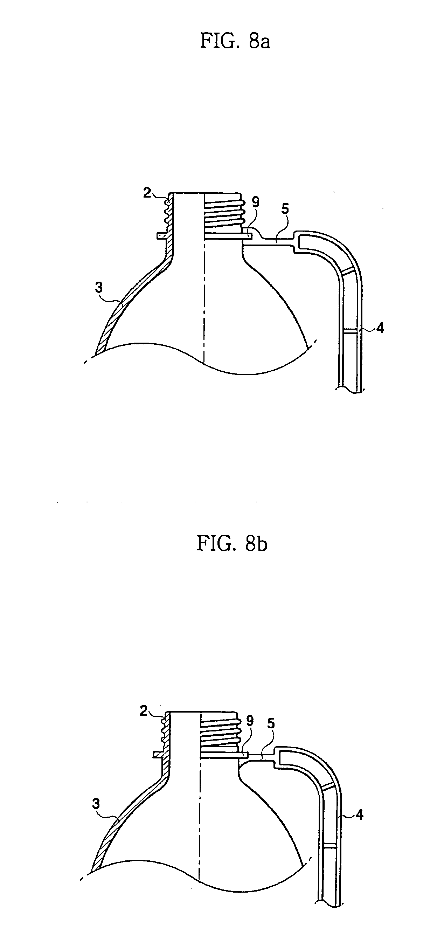

FIGS. 8a and 8b are sectional views of PET bottles with integrated handles according to a fifth embodiment of the present invention. In the PET bottles according to the fifth embodiment, a single support ring 9 is formed around a lower portion of the mouth 2 of the body 3. Furthermore, as shown in FIG. 8a, the handle 4 may be injection-molded so that the extension 5 of the handle 4 is integrated with the single support ring 9 while covering parts of upper and lower surfaces of the ring 9. Alternatively, as shown in FIG. 8b, the handle 4 may be injection-molded so that the extension 5 of the handle 4 is integrated with both a part of the lower surface of the ring 9 and a part of the body 3.

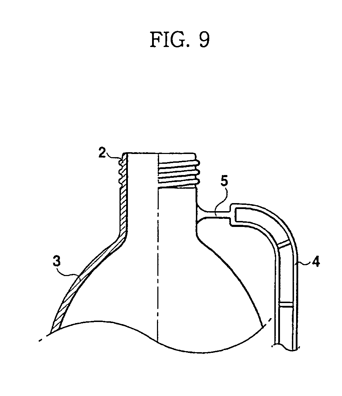

FIG. 9 is a sectional view of a part of a PET bottle with an integrated handle according to a sixth embodiment of the present invention. In the PET bottle according to the sixth embodiment, the handle 4 is injection-molded so that the extension 5 of the handle 4 is directly integrated with the body 3 at a position around a lower portion of the mouth 2.

To manufacture the PET bottle with the integrated handle according to the present invention, the molten resin is injected through the resin injector into the first mold unit 10 that comprises the first, second and third molds 11, 12 and 13 and defines therein the cavity with the shape corresponding to the designated shape of the preform to be injection-molded, thus producing the preform having the mouth 2, the body 3 and the handle 4, as shown in FIG. 3a.

Thereafter, the body 3 of the injection-molded preform is heated by the heater H as shown in FIG. 3b so that the body 3 is in an expansible state. Thereafter, as shown in FIG. 3c, the heated preform is placed in the second mold unit 20 which has therein the cavity with the predetermined shape corresponding to the designated shape of the PET bottle to be manufactured. Thereafter, the drawing bar 21 is moved by a drive unit (not shown) downward into the body 3, thus lengthening the body 3 to the predetermined length. After the drawing process, compressed air under a predetermined pressure is blown into the body 3 to expand the body 3, thus shaping the body 3 according to the shape of the cavity of the second mold unit 20 and producing the desired PET bottle.

When the body 3 is expanded to be shaped according to the shape of the cavity of the second mold unit 20 through the air blowing process, the locking piece 6 provided at the end of the handle 4 is buried in the expanded body 3. Thus, the end of the handle 4 which has the locking piece 6 is integrated with the body 3.

When the preform is completely shaped through the drawing and blowing processes using the second mold unit 20 as described above, the injection-molding process of manufacturing the PET bottle having the integrated handle is ended.

In the PET bottle of the present invention produced through the above-mentioned method, the upper end of the handle 4 is integrated, through the injection-molding process, with the body 3 at a position around the lower portion of the mouth 2 by the extension 5, as shown in FIG. 4. Furthermore, the locking piece 6 is provided at the lower end of the handle 4 to be buried in and integrated with the body 3.

The longitudinal grooves 7, which are formed on the body 3 within the predetermined portion around the handle 4 to be spaced out at regular intervals, serve as reinforcing grooves. Due to the longitudinal grooves 7, the strength of the designated portion of the body 3 around the handle 4 increases to effectively endure the longitudinal and latitudinal stresses which may be generated in the body 3 by the load applied from the handle 4 to the body 3. The grooves 7 also increase the strength of the entire parts of the body 3, so that the handle 4 is not easily broken or removed from the body 3.

Furthermore, during the injection-molding process of producing the PET bottle of the present invention, a sub-extension 8 may be provided at an intermediate portion of the handle 4 to be buried in and integrated with the body 3 as shown in FIG. 5a, while the locking piece 6 is provided at the end of the handle 4 to be buried in and integrated with the body 3. Alternatively, two sub-extensions 8' may be provided at intermediate portions of the handle 4 to be buried in and integrated with the body 3 as shown in FIG. 5b, while the locking piece 6 of the end of the handle 4 is buried in and integrated with the body 3.

When the one or more sub-extensions 8 and 8' are provided to integrate the handle 4 with the body 3 as described above, the integration force of the handle 4 relative to the body 3 further increases.

Furthermore, as shown in FIGS. 6a, 6b and 6c, the PET bottle of the present invention may be produced in the form of a single structure in which two handles 4 are integrally formed at opposite sides of the body 3 through the method of FIGS. 1 and 2. In the embodiment, the two handles 4 may be simply integrated with opposite sides of the body 3 without forming any sub-extension, as shown in FIG. 6a.

In a modification, the two handles 4 may integrally extend from upper portions to intermediate portions on the opposite sides of the body 3, as shown in FIG. 6b, with a sub-extension 8 integrally provided on the intermediate portion of the inside surface of each of the two handles 4 to be integrated with the body 3.

In another modification, the two handles 4 may integrally extend from upper portions to lower portions on the opposite sides of the body 3, as shown in FIG. 6c, with two spaced sub-extensions 8' integrally provided on intermediate portions of the inside surface of each of the two handles 4 to be integrated with the body 3.

Furthermore, in the embodiment of FIGS. 7a, 7b, 7c and 7d, the handle 4 may be integrated with the body 3 through an injection-molding process by means of a plurality of support rings 9 which are formed around the lower portion of the mouth 2 of the body 3 to define the spaced annular grooves 9' between them. In this embodiment, the handle 4 may be injection-molded so that the extension 5 is integrated with an upper support ring 9a, a middle support ring 9b or a lower support ring 9c of the plurality of support rings 9.

In the embodiment of FIGS. 8a and 8b, a single support ring 9 is formed around a lower portion of the mouth 2 of the body 3. Furthermore, the handle 4 may be injection-molded so that the extension 5 of the handle 4 is integrated with the single support ring 9 while covering parts of the upper and lower surfaces of the ring 9. Alternatively, the handle 4 may be injection-molded so that the extension 5 is integrated with both a part of the lower surface of the ring 9 and a part of the body 3.

In the embodiment of FIG. 9, the handle 4 is injection-molded so that the extension 5 is directly integrated with the body 3 at a position around the lower portion of the mouth 2.

In addition to the structures of the PET bottles provided by the above-mentioned embodiments of the present invention, the handle may be variously integrated with the body to provide PET bottles having a variety of structures. Thus, it is possible to provide various PET bottles having integrated handles through the above-mentioned method.

As apparent from the above description, the present invention provides a PET bottle with an integrated handle and a method of manufacturing the PET bottle, in which a handle is integrated with a PET bottle body at a drawing/blowing step of shaping the PET bottle body. Thus, the handle is firmly integrated with the PET bottle body to allow a user to stably and safely handle the PET bottle, and results in a simple and easy process of providing the handle on the PET bottle body. The present invention thus secures the operational stability and safety of PET bottles while users handle the PET bottles.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A method of manufacturing a polyethylene terephthalate (PET) bottle through an injection-molding process, comprising:
a preform-forming step of injecting a molten resin into a first mold unit through an injector, thus producing a preform having a mouth, a body and a handle through the injection-molding process;
a heating step of heating the preform by a heater;
a drawing/blowing step of placing the heated preform in a second mold unit, and drawing the body of the preform by a drawing bar to lengthen the body, and blowing air into the body of the preform to shape the body according to a shape of a cavity of the second mold unit;
a handle integrating step of burying an end of the handle in the body of the preform to integrate the handle with the body while the body is blown with the air at the drawing/blowing step; and
a product-removing step of opening the second mold unit to remove a product from the second mold unit.

2. The method as set forth in claim 1, wherein, at the preform-forming step, the mouth, the body and the handle of the preform are formed of a same material to be integrated into a single structure through the injection-molding process.

3. A polyethylene terephthalate (PET) bottle with a mouth, a body and a handle, comprising:
an extension provided, through an injection-molding process, to extend from the handle to a predetermined portion of the body around a lower portion of the mouth, thus integrating the handle with the body; and
a locking piece provided at the end of the handle.

4. The PET bottle as set forth in claim 3, further comprising:
a plurality of longitudinal grooves provided on the body within a predetermined portion around the handle, which is integrated with the body through the injection-molding process, so that the plurality of grooves are spaced out at regular intervals.

5. The PET bottle as set forth in claim 3, wherein the handle is integrally formed at each of opposite sides of the body through the injection-molding process.

6. The PET bottle as set forth in claim 3, further comprising:
a plurality of support rings formed around the lower portion of the mouth to be spaced out at regular intervals, thus defining a plurality of spaced annular grooves between the support rings, wherein the handle is integrated with the body at the support rings through the injection-molding process.

7. The PET bottle as set forth in claim 3, further comprising:
a single support ring formed around the lower portion of the mouth, wherein the extension of the handle is integrated with the single support ring while covering a part of the single support ring through the injection-molding process.

8. The PET bottle as set forth in claim 3, wherein the extension of the handle is directly integrated with the body at a position around the mouth through the injection-molding process.

9. The PET bottle as set forth in claim 5, further comprising:
a sub-extension provided, through the injection-molding process, at an intermediate portion of an inside surface of the handle, thus being integrated with the body.

10. The PET bottle as set forth in claim 6, wherein the extension of the handle is integrated with an upper support ring of the plurality of support rings through the injection-molding process.

11. The PET bottle as set forth in claim 6, wherein the extension of the handle is integrated with a middle support ring of the plurality of support rings through the injection-molding process.

12. The PET bottle as set forth in claim 6, wherein the extension of the handle is integrated with a lower support ring of the plurality of support rings through the injection-molding process.

13. The PET bottle as set forth in claim 6, wherein the extension of the handle is integrated, through the injection-molding process, with a middle support ring of the plurality of support rings while covering parts of the annular grooves defined between the plurality of support rings.

14. The PET bottle as set forth in claim 7, wherein the extension of the handle is integrated, through the injection-molding process, with both a part of a lower surface of the single support ring and a part of the body.

15. The PET bottle as set forth in claim 9, wherein the sub-extension comprises a plurality of sub-extensions which are provided, through the injection-molding process, on the inside surface of the handle to be buried in and integrated with the body.

16. The PET bottle as set forth in claim 9 or 15, wherein the sub-extension comprises a plurality of sub-extensions which are provided, through the injection-molding process, on the inside surfaces of the handles on the opposite sides of the body to be buried in and integrated with the opposite sides of the body.
